(19) Europäisches Patentamt
European Patent Office
Office européen des brevets

(11) **EP 3 047 174 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **14741810.7**

(22) Anmeldetag: **19.07.2014**

(51) Int Cl.:
***F16F 15/02*** *(2006.01)*

(86) Internationale Anmeldenummer:
**PCT/EP2014/001973**

(87) Internationale Veröffentlichungsnummer:
**WO 2015/039714 (26.03.2015 Gazette 2015/12)**

(54) **ROTATIONSDÄMPFER FÜR EIN KRAFTFAHRZEUG**

ROTATIONAL DAMPER FOR A MOTOR VEHICLE

AMORTISSEUR ROTATIF POUR VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013 DE 102013015702**

(43) Veröffentlichungstag der Anmeldung:
**27.07.2016 Patentblatt 2016/30**

(73) Patentinhaber:
• **Audi AG**
**85045 Ingolstadt (DE)**
• **Karlsruher Institut für Technologie**
**76131 Karlsruhe (DE)**

(72) Erfinder:
• **KOCH, Thilo**
**85055 Ingolstadt (DE)**
• **GAUTERIN, Frank**
**76829 Leinsweiler (DE)**
• **SCHEURICH, Bastian**
**74206 Bad Wimpfen (DE)**

(74) Vertreter: **Reichert, Thomas Klaus**
**Audi AG**
**Patentabteilung**
**85045 Ingolstadt (DE)**

(56) Entgegenhaltungen:
**EP-A1- 1 935 679**      **EP-A1- 2 103 471**
**US-A1- 2011 231 041**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft einen Rotationsdämpfer für ein Kraftfahrzeug, insbesondere zur Dämpfung einer Relativbewegung einer nicht gefederten Masse gegenüber einer gefederten Masse.

Das Fahrwerk dient der Kopplung des Fahrzeugaufbaus mit der Straße. Neben der Übertragung der für das Fahren relevanten Kräfte, ermöglicht ein vertikaler Freiheitsgrad die Anpassung des Komfortverhaltens und der Fahrsicherheit. Das Schwingungsverhalten zwischen Fahrzeugaufbau und dem Rad, mit seinen Rad führenden Elementen, wird durch ein Feder- und ein Dämpferelement bestimmt. Das Federelement dient dem statischen Halten des Aufbaus. Veränderungen im Hub der Feder werden als Federenergie gespeichert und entsprechend wieder freigegeben. Das Dämpferelement dient dem Abbau von Schwingungsenergie des Aufbaus, der gefederten Masse, als auch des Rades mit Radträger, der ungefederten Masse. Dabei verbindet der Schwingungsdämpfer direkt die gefederte und die ungefederte Masse. Der relativen Geschwindigkeit zwischen gefederter und ungefederter Masse wird nach dem Stand der Technik allgemein durch die Drosselwirkung von Hydraulikflüssigkeit eine Kraft entgegen gebracht.

Außerdem sind im Stand der Technik bspw. die DE 10 2011 101 350 A1 bekannt oder die DE 10 2011 101 701 DE, die zur Krafterzeugung elektrische oder magnetische Kräfte verwenden. Stets gemeinsam ist die Tatsache, dass gefederte und ungefederte Massen über das Dämpferelement verbunden sind und eine gegenseitige Abstützung, zwischen beiden, stattfindet.

Neben der Tatsache, dass der gyroskopische Effekt im Bereich Fahrwerk bei einem Automobil genutzt werden soll, liegt eine Neuerung zum Stand der Technik in der gezielten Regelung und dem aufbringen von Momenten in alle Richtungen, zu jedem beliebigen Zeitpunkt, der Achse des Präzessionsmomentes vor.

Aus dem Stand der Technik, DE60200864T2, US20040244513A1 und WO2011/100796A1, sind Gyrostabilisatoren für das Stabilisieren eines Schiffes, dessen Bewegung durch Wellen hervorgerufen werden, bekannt. Diese beinhalten beispielsweise ein erstes Sensorsystem, das die Präzession eines Schwungrades misst, ein Regelsystem, das ein Regelsignal generiert, und einen Aktuator, der ein Präzessionsmoment auf das Schwungrad stellt. Das hierbei aufgebrachte Präzessionsmoment wirkt als geregeltes Gegenmoment, sodass keine antreibende Energie auf das Schwungrad einwirkt. Zudem entsteht bei einem Schiff nur eine Wanken- bzw. Rollbewegung, die durch die Vorrichtung stabilisiert werden soll.

In diesem Zusammenhang offenbart die Druckschrift EP0650890B1 eine Vorrichtung zur Unterdrückung der Schwingung eines Objekts. Es ist dazu ein Kontrollmomentkreisel vorgesehen, der ein Schwungrad umfasst, das mit einer ersten Welle verbunden ist, welche drehbar in einem Kardanring gelagert ist, wobei der Kardanring eine zweite Welle umfasst, die drehbar in einem dessen Schwingung zu kontrollierenden Objekts gelagert ist.

Eine Winkelmesseinrichtung zur Messung der Schwingung des zu kontrollierenden Objekts, um eine Achse, die normal zu der von der ersten und zweiten Welle aufgespannten Ebene liegt.

Zur Schwingungsdämpfung ist an der zweiten Achse ein Generator vorgesehen, der abhängig von der gemessenen Winkelgeschwindigkeit der dritten Achse bremst, wobei die Schwungscheibe über einen Motor in Drehung gehalten wird.

Bei Kreiseln ist der Effekt der Präzession bekannt. Wird die Rotationsachse eines rotierenden Körpers verändert, so entsteht eine Kraft die senkrecht zur Rotations- und zur Auslenkungsachse steht. Diese Kraft wird als Präzession bezeichnet. In einer kardanischen Aufhängung wird das Zusammenspiel zwischen den einzelnen Drehzahlen und Momenten durch die dynamischen Euler-Gleichungen

$$M_a \;=\; J_a \dot{\varpi}_a - (J_b - J_c)\, \varpi_c \varpi_b \qquad\qquad (1)$$

$$M_b \;=\; J_b \dot{\varpi}_b - (J_c - J_a)\, \varpi_a \varpi_c \qquad\qquad (2)$$

$$M_c \;=\; J_c \dot{\varpi}_c - (J_a - J_b)\, \varpi_b \varpi_a \qquad\qquad (3)$$

im körperfesten Koordinatensystem beschrieben. Dabei gilt $d\varphi_i/dt = \overline{\omega}_i$ und $d\overline{\omega}_i/dt = \overline{\dot{\omega}_i}$, wobei $\varphi_i$ die aktuelle Winkelposition der jeweiligen Welle beschreibt. Dokument EP1935679 offenbart einen Rotationsdämpfer nach dem Oberbegriff des Anspruchs 1.

Es ist Aufgabe der Erfindung einen verbesserten Dämpfer für ein Kraftfahrzeug anzugeben.

Die Aufgabe wird durch die kennzeichnenden Merkmale des Anspruchs 1 in Verbindung mit seinen Oberbegriffsmerkmalen gelöst.

Die Unteransprüche bilden eine vorteilhafte Weiterbildung der Erfindung.

Rotationsdämpfer für ein Kraftfahrzeug, umfasst eine erste Welle, die gegenüber einem ersten Bauteil drehbar gelagert ist, und mit einem zweiten Bauteil, verbunden ist, welches eine Drehbewegung gegenüber dem ersten Bauteil ausführt, wobei die erste Welle einen Rahmen aufweist, in welchem eine zweite Welle orthogonal liegt und drehbar gelagert ist, wobei die zweite Welle einen Rahmen aufweist, in welchem eine dritte Welle orthogonal zur zweiten Welle und orthogonal zur dritten Welle angeordnet ist und im zweiten Rahmen drehbar gelagert ist, wobei die zweite Welle und die dritte Welle je mit einem Wellenantrieb verbunden sind, und ferner die dritte Welle eine Schwungmasse aufweist, wobei eine Drehung der zweiten Welle durch den zweiten Wellenantriebe eine Änderung der Winkelgeschwindigkeit der mit dem zweiten Bauteil verbundenen ersten Welle bewirkt, wobei ein erster Sensor zur Bestimmung der Winkelgeschwindigkeit der ersten Welle vorgesehen ist, wobei ein Reglereinheit wenigstens zur Beeinflussung der Winkelgeschwindigkeit der zweiten Welle vorgesehen ist

Erfindungsgemäß ist vorgesehen, dass ein vom ersten Sensor unterschiedlicher Sensor zur Bestimmung der Lageänderung des Fahrzeugs mit der Reglereinheit verbunden ist. Dadurch kann über die zweite Welle eine Beeinflussung des zweiten Bauteils, das mit der ungefederten Masse verbunden ist, unter Berücksichtigung der Fahrzeuglage erfolgen. Die Erfindung verwendet den Effekt der Drehträgheit, um an geeigneter Stelle Kräfte ins Fahrwerk einzuleiten. Diese Kräfte sollen die Funktion eines herkömmlichen Dämpferelementes ersetzen und erweitern.

In einer vorteilhaften Weiterbildung kann die Reglereinheit derart mit dem zweiten Wellenmotor verbunden sein, dass diese die Winkelgeschwindigkeit und oder das Drehmoment der zweiten Welle erhöht. Durch die aktive Ansteuerung des zweiten Wellenmotors kann mittels einer Energiezuführung eine aktive Fahrwerkseinstellung erfolgen.

Durch eine aktive Energiezuführung können insbesondere vier einzelne gyroskopische Elemente - kardanisch aufgehängte Kreiselelemente - an den Fahrzeugecken, welche direkt Kräfte bzw. Momente über das zweite Bauteil auf die ungefederten Teile des Fahrwerks ausüben, Impulse in die ungeferdete mit der gefederten Masse verbindenden zweiten Bauteile, insbesondere Lenker, einbringen und so neben der Funktion Schwingungen im Wanken zu unterdrücken außerdem das Unterdrücken von Huben und Nicken ermöglichen. Zudem ist eine Kontrolle der Vertikalbewegung jedes einzelnen Rades möglich.

Durch die Regelung des Momentes an der zweiten Welle oder der Einstellung der Winkelgeschwindigkeit der zweiten Welle erfolgt bei entsprechender Wahl der Trägheitsmomente bei einem kleinen Moment $M_b$ ein hohes Moment $M_a$ an der äußeren Welle.

Bei Bedarf kann der Dämpfer auf diese Weise momentenfrei arbeiten, was den Fahrkomfort in manchen Situationen begünstigen kann.

Je größer die Drehzahl für die dritte Welle eingestellt werden kann, desto geringer kann der Bauraum ausfallen, den eine erfindungsgemäße Dämpferanordnung einnimmt. Die gesamte Energie, die dem System durch Regelung oder durch Straßenanregung zugeführt wird, setzt die Vorrichtung in Rotationsenergie der innersten Welle um. Durch eine Rekuperation in elektrische Energie kann diese Rotationsenergie außerhalb des Systems bereitgestellt werden. Die Bewegungsenergie aus stochastischen Straßenanregungen wird dabei nicht rein in Wärmeenergie umgesetzt, sondern steht zur weiteren Verwendung oder Speicherung zur Verfügung. Erfindungsgemäß kann durch die Rekuperation von Dämpferenergie einen nicht zu vernachlässigenden Beitrag zur gesamten Energiebilanz eines Fahrzeugs geleistet werden.

Vorzugsweise kann der die Wellenenden verbindende Rahmen als Kreisring ausgebildet sein.

Insbesondere sind Erfassungseinrichtungen vorgesehen, die als Eingangsgröße für die Reglereinheit die Winkelpositionen der ersten und zweiten Welle erfassen. Dadurch kann ein übereinanderliegen der ersten und dritten Welle, und damit eine Singularität, vermieden werden. Aus den Winkelpositionen kann zudem die Winkelgeschwindigkeit rechnerisch bestimmt werden. Zudem kann zur Bestimmung der Winkelgeschwindigkeit auch ein Sensor für die direkte Erfassung vorgesehen sein.

In einer weiteren vorteilhaften Ausgestaltung kann auch der die dritte Welle antreibende Wellenmotor mit der Reglereinheit verbunden sein. Auf diese Weise kann über den Motor die Winkelgeschwindigkeit der dritten Welle zur Regelung der zweiten Welle herangezogen werden oder auch dem Wellenmotor der dritten Welle Energie zugeführt werden, um die Schwungmasse gegebenenfalls zu beschleunigen.

In einem weiteren Aspekt, betrifft die Erfindung ein Verfahren zur Regelung einer erfindungsgemäßen Dämpferanordnung. Gemäß dem Verfahren wird als Regelgröße das Moment der ersten Welle und/oder die Winkelgeschwindigkeit der ersten Welle geregelt. Dazu wird eine Stellgröße an der zweiten Welle so beeinflusst, dass das Vorzeichen der Beschleunigung der Welle, dem Vorzeichen der Winkelgeschwindigkeit der Welle entspricht.

Insbesondere kann die Bestimmung des Sollwerts des Moments basierend auf einer Dämpferkennlinie erfolgen, in welcher das Moments der ersten Welle in Abhängigkeit der Winkelgeschwindigkeit hinterlegt ist. Der Sollwert zur Regelung der Regelgröße wird damit abhängig von der gemessenen Winkelgeschwindigkeit der ersten Welle eingestellt.

In einem weiteren Aspekt betrifft die Erfindung die Verwendung eines kardanisch aufgehängten Kreiselelements, umfassend eine erste Welle, die gegenüber einem ersten Bauteil drehbar gelagert ist, und mit einem zweiten Bauteil, verbunden ist, welches eine Relativbewegung gegenüber dem ersten Bauteil ausführt, wobei die erste Welle einen Rahmen aufweist, in welchem eine zweite Welle orthogonal liegt und drehbar gelagert ist, wobei die zweite Welle einen Rahmen aufweist, in welchem eine dritte Welle orthogonal zur zweiten Welle und im zweiten Rahmen drehbar gelagert ist, wobei die zweite Welle und die dritte Welle je mit einem Wellenantrieb verbunden sind, und ferner die dritte Welle eine Schwungmasse aufweist, wobei eine Drehung der zweiten Welle durch den zweiten Wellenantrieb eine Änderung der Winkelgeschwindigkeit oder des Moments der mit dem zweiten Bauteil verbundenen ersten Welle bewirkt, zur Dämpfung einer Relativbewegung einer ungefederten Masse eines Kraftfahrzeugs gegenüber einer gefederten Masse eines Kraftfahrzeugs.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

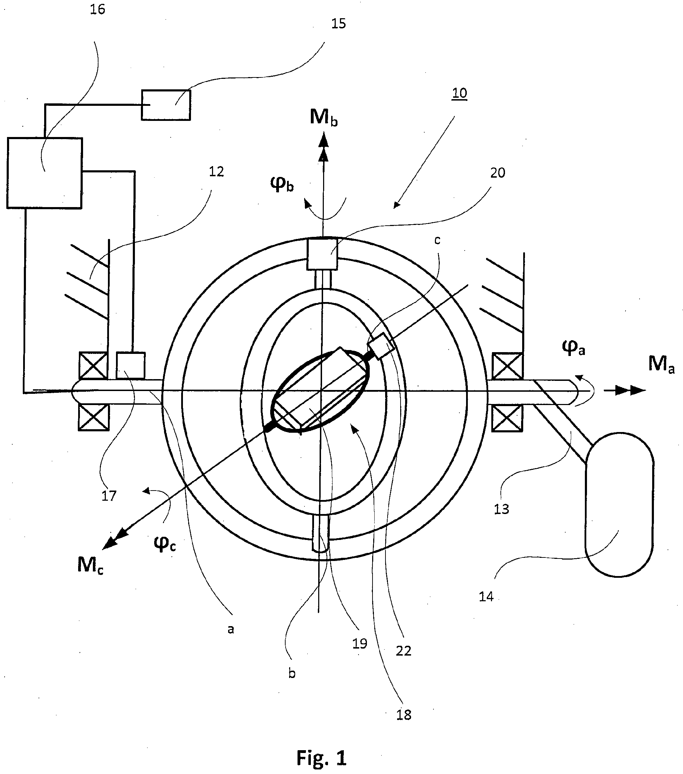

Fig. 1 eine schematische Darstellung einer erfindungsgemäßen Dämpferanordnung;

In Fig. 1 ist eine erfindungsgemäße Dämpferanordnung 10, umfassend einen kardanisch aufgehängten Kreisel, dargestellt. Die äußerste Welle a, erlaubt eine einfache Drehung $\varphi_a$. Diese Welle a ist mit einer ungefederten Masse, einem Rad 14, über einen Querlenker 13 verbunden und gegenüber dem Aufbau 12 eines Fahrzeugs drehbar gelagert.

In der Welle a ist um 90° verdreht einer weiteren Welle b angeordnet. Diese dreht in Richtung $\varphi_b$. In der Welle b wiederum ist die Welle c um 90° verdreht zur Welle b gelagert. An der Welle c ist ein Kreiselelement 18 angebracht, welches mit Welle c in Richtung $\varphi_c$ dreht.

Auf der Welle c befindet sich ein Drehkörper 19 der bei Drehung um seine drei Raumachsen die drei Drehträgheiten von $J_a$, $J_b$ und $J_c$ aufweist.

Die Schwungmasse des Kreiselelementes der Welle c ist schematisch als quaderförmiger Drehkörper 19 dargestellt und veranschaulicht exemplarisch den Trägheitstensor der Schwungmasse mit den den entsprechenden Wellen zugeordneten Drehträgheiten $J_a$, $J_b$ und $J_c$. Das Übersetzungsverhältnis der einzelnen Momente wird dabei durch die Drehträgheiten $J_a$, $J_b$ und $J_c$ des Rotationskörpers um seine drei Raumachsen im Hauptachsensystem bestimmt. Die Höhe der Momente ist abhängig von der Winkelgeschwindigkeit $\bar{\omega}_c$.

Im Anfangszustand rotiert der Rotationskörper mit einer bestimmten Anfangsdrehzahl $\bar{\omega}_c$. Insbesondere liegt eine Drehgeschwindigkeit der Welle c mit $|\bar{\omega}_c(0)| \gg 0$ vor.

Die Winkelposition der ersten Welle a ist mit $\varphi_a$, das übertragene Moment mit $M_a$ bezeichnet. Entsprechendes gilt analog für die zweite Welle b und die dritte Welle c.

Die kardanische Aufhängung aus Fig. 1 wird zur Aufbringung einer Dämpfungskraft verwendet. Dabei wird die äußerste Welle a zur Übertragung von Drehgeschwindigkeit und Drehmoment konstruktiv an einen Fahrwerklenker angebunden. Die nach innen folgende zweite Welle b dient der Regelung von Drehgeschwindigkeit und Drehmomentenübertragung.

Wenn ein Moment $M_b$ wirksam wird, entsteht aufgrund der Präzession ein Moment $M_a$. Die Momente führen zu einer Drehung der jeweiligen Welle mit einer zugeordneten Drehgeschwindigkeit. Ein Moment $M_b$ führt folglich zu einer Drehgeschwindigkeit $\bar{\omega}_b$ der Welle b. Diese Verdrehung verändert die Richtung des Winkelgeschwindigkeitsvektors $\bar{\omega}_c$ des innersten Kreiselelementes. Auf eine solche Störung reagiert der Kreisel mit einem Präzessionsmoment $M_a$ in Richtung $\varphi_a$.

Da aber die Winkelgeschwindigkeit $\bar{\omega}_c$ konstruktionsbedingt ebenfalls den Winkelgeschwindigkeitsvektor $\bar{\omega}_c$ verändert, besteht ein direkter Einfluss aller drei Achsen untereinander. Das Einbringen von Energie in eine Achse führt demzufolge zu einer Veränderung der Energie der beiden anderen Achsen. In der innersten dritten Wellen c findet die Speicherung von überschüssiger Rotationsenergie statt.

Wird die Welle a als Eingang betrachtet, wenn dieser über eine Anregung durch das Rad 14 Energie zugeführt wird, so sind $M_a$ und $\bar{\omega}_a$ gleichgerichtet. An Welle b kann diese Energie dann wieder entnommen werden, dabei sind $M_b$ und $\bar{\omega}_b$ entgegengesetzt orientiert. Der umgekehrte Fall ist ebenso möglich.

Gleichgerichtete Beträge von $M_b$ und $\bar{\omega}_b$ führen zu ungleichgerichteten Beträgen von $M_a$ und $\bar{\omega}_a$. Wird nicht die gesamte Energie in Welle b entnommen, so wird auf Grund des Rückkoppeleffektes die Drehzahl in Welle c steigen. Die überschüssige Energie wird in Form kinetischer Energie in Welle c gespeichert. So ist es denkbar mindestens eine Welle, maximal 2 Wellen, als Ein- bzw. Ausgang für Energieflüsse zu verwenden und die übrigbleibende Welle(n) als Aus- bzw. Eingang.

Moment $M_a$ und Winkelgeschwindigkeit $\bar{\omega}_a$ wirken vom Rad auf die Welle a und versetzen das System in Bewegung. Es entsteht eine Relativbewegung an Welle b. Wird zur Drehgeschwindigkeit $\bar{\omega}_b$ ein Gegenmoment $M_b$

aufgebracht, so wird die Relativbewegung an Welle b gedämpft. Dies führt wieder zum Dämpfen der Winkelgeschwindigkeit $\overline{\omega}_a$.

Je nach Größe des Betrages von Moment $M_b$ fällt die Dämpfung stärker oder schwächer aus.

Erfindungsgemäß wird das Moment $M_b$ so geregelt, dass $\overline{\omega}_c$ und $\overline{\omega}_c$ stets das gleiche Vorzeichen besitzen. Dies hat zur Folge, dass sowohl die in $M_b$ zur Regelung aufgebrachte Energie, als auch die durch die Straßenanregung einfließende Energie in Rotationsenergie der Welle c gespeichert werden. Diese Energie kann über den Wellenmotor 22 an der innersten Welle über das Moment $M_c$ rekuperiert werden.

Wie bereits beschrieben sind für die Verhältnisse der einzelnen Momente zu einander die drei Drehträgheiten $J_i$ verantwortlich. Bei der kardanischen Aufhängung gibt es zwei Gleichgewichtszustände. Für die hier relevante Ausführung erfüllen die Drehträgheiten die Gleichung

$$(J_a - J_b) \ (J_a - J_c) \leq 0. \qquad\qquad (4)$$

Wonach das System somit instabil ist. Ein Regler, der das Moment $M_b$ in Abhängigkeit von $\overline{\omega}_a$ regelt, weist die Abhängigkeit

$$M_b = f(\varpi_a, \ a_c, \ \dot{\varpi}_c, \ M_a, \ldots) \qquad\qquad (5)$$

auf.

Bei einer Radaufhängung, gemäß Fig. 1, wird die vertikale Straßenanregung durch einen Querlenker in Rotationsbewegung an seiner Lagerstelle umgewandelt. Die erfindungsgemäße Dämpferanordnung nimmt an der Achse a die aus der Straßenanregung resultierende Drehbewegung $\varphi_a$ auf. In der Funktion als Rotationsdämpfer wirkt das Moment entgegengesetzt zur Drehgeschwindigkeit. Dieses Drehmoment wird durch die Drehung der Welle b und c hervorgerufen und in der Drehung $\varphi_a$ der Welle a als Moment $M_a$ abgegeben. Die Stellgröße stellt dabei das Moment $M_b$ dar. Die Drehbewegung $\overline{\omega}_c$ dient als Schwungmassenspeicher, wobei ein negatives Moment $M_c$ zu einer Rekuperation führt. Darüber hinaus kann die Stellgröße $M\_b$ ebenfalls zur Rekuperation verwendet werden.

Darüber hinaus kann der Aktuator verwendet werden, um aktiv Vertikalkräfte am Rad zu stellen, d.h. Funktionen eines aktiven Fahrwerks zu übernehmen.

Vorteil gegenüber herkömmlichen Systemen, wie beispielsweise hydraulischer oder elektromotorischer Aktuatoren ist die in den Aktuator integrierte hohe Übersetzung und die Möglichkeit zur Energiespeicherung. Die Energieerzeugung im Fahrzeug wird dadurch entlastet. Es treten geringere Spitzenströme auf, da Leistung gleichförmiger abgerufen werden kann. Zudem kann der Aktuator je nach Regelungsstrategie durch Rekuperation von Dämpfungsenergie sogar Energie ins Bordnetz zurückspeisen.

Neben den beiden Wellenmotoren 20, 22 für Welle b und Welle c ist es notwendig hinreichend genau zu ermitteln in welchem Bewegungszustand sich das System des Gyroskop gerade befindet. Notwendig ist die genaue Ermittlung der Winkelposition von Welle b, da ein übereinander liegen von Welle c und Welle a nicht zulässig ist. Weiter ist die Erfassung der Winkelposition $\varphi_a$ von Welle a notwendig um eine Orientierung zwischen Welle a und Welle b herstellen zu können. Für Welle c ist in erster Linie die Winkelgeschwindigkeit notwendig; eine Winkelposition ist aufgrund von Symmetrieerscheinungen nicht relevant.

Rechnerisch kann aus einer Winkelpositionen die entsprechende Winkelgeschwindigkeit abgeleitet werden. Im Sinne einer genau Messung und Weiterverarbeitung der Signale, sind Sensoren zur Ermittlung von Winkelgeschwindigkeit von Welle a und b, sowie der Winkelbeschleunigung von Welle a, b und c von Vorteil.

Die Energie bzw. Leistung, welche im System umgesetzt wird ist entweder gleich groß oder wird vom System gespeichert bzw. abgegeben.

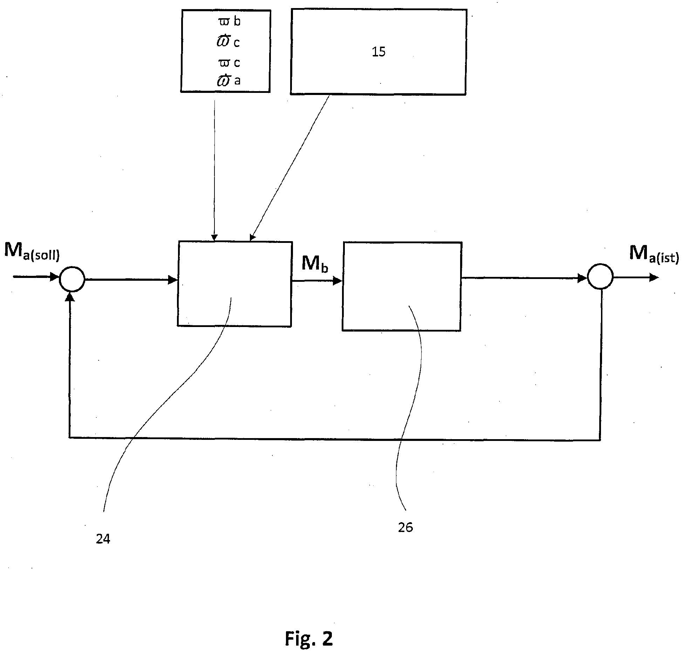

Fig. 2 zeigt einen schematischen Regelkreis der Reglereinheit 16, umfassend einen Regler 24 und eine Regelstrecke 26. In der Regel wird das Produkt aus $M_a$ und $\overline{\omega}_a$ als Eingangsleistung betrachtet. Diese Leistung wird der Straße entnommen. Die Winkelgeschwindigkeit $\overline{\omega}_a$ ist dabei durch die Bewegung des Radträgers vorgegeben. Das Moment der Welle $M_b$ und die Winkelgeschwindigkeit $\overline{\omega}_b$ dienen als Stellgrößen zur Regelung des Moments der ersten Welle a. Zusätzliche Regelinformation werden dem Regler über eine Lagesensor 15 des Fahrzeugs zugeführt.

Erfindungsgemäß wird das Moment $M_b$ so geregelt, dass die Winkelgeschwindigkeit $\overline{\omega}_c$ und die Beschleunigung der Welle $a_c$ stets das gleiche Vorzeichen besitzen. Dies hat zur Folge, dass sowohl die in $M_b$ zur Regelung aufgebrachte Energie, als auch die durch die Straßenanregung einfließende Energie in Rotationsenergie der Welle c gespeichert werden. Diese' Energie kann über den Wellenmotor 22 an der innersten Welle über das Moment $M_c$ rekuperiert werden.

Wie bereits beschrieben sind für die Verhältnisse der einzelnen Momente zu einander die drei Drehträgheiten $J_i$ verantwortlich. Bei der kardanischen Aufhängung gibt es zwei Gleichgewichtszustände. Für das instabile System der Dämpferanordnung stellt der Regler, das Moment $M_b$ wenigstens in Abhängigkeit von $\overline{\omega}_a$, $\overline{\omega}_c$, $M_a$, $a_c$ unter Berücksichtigung der Fahrzeuglage. Der Regler stellt das Soll-Moment abhängig von einer erfassten Winkelgeschwindigkeit $\overline{\omega}_a$ basierend auf einer hinterlegten Dämpferkennlinie ein. Die Dämpferkennlinie bildet den Verlauf des Moments $M_a$ über die Winkelgeschwindigkeit $\overline{\omega}_a$ ab.

Im einfachsten Fall wirkt $M_b$ der Richtung von $\overline{\omega}_b$ entgegen. Dabei wird genauso viel Leistung aus dem System genommen, wie durch die Straße hinein gelangt. Soll nun eine spezielle Kennlinie zwischen $M_a$ und $\overline{\omega}_a$ erzielt werden, so kann $M_b$ der Richtung von $\overline{\omega}_b$ nicht vollständig bei einem Schwingungsvorgang entgegen wirken. Das bedeutet, dass durch das Produkt $M_b$ und $m_b$ neben der Leistung, die von der Straße umgesetzt wird, teilweise Leistung übrig bleibt. Diese führt in Welle c zu einer Erhöhung der Drehzahl $w_c$. Das gesamte System hat dann eine höhere Gesamtleistung. Wird durch das Produkt $M_b$ und $\overline{\omega}_b$ mehr Leistung abgebaut, als von der Straße kommt, wird die Winkelgeschwindigkeit $w_c$ abnehmen. Da $w_c$ immer eine Mindestgeschwindigkeit aufweisen muss, kann diese über den die Welle c antreibenden Antrieb erhöht werden.

Die Erhöhung von $\overline{\omega}_c$ kann beispielsweise durch einen Elektromotor 22 erfolgen. Dieser Energiezufluss kann an Welle a oder Welle b abgebaut werden. Die Richtung und Anzahl der Energiezu- und Abflüsse ist dabei beliebig.

**Bezugszeichenliste**

| | |
|---|---|
| 10 | Dämpferanordnung |
| 12 | Aufbau / gefederte Masse |
| 14 | Rad / ungefederte Masse |
| 13 | Querlenker |
| 15 | Lagesensor |
| 16 | Rahmen |
| 18 | Kreiselelement |
| 19 | Drehkörper |
| 20 | Wellenmotor |
| 22 | Wellenmotor |
| 24 | Regler |
| 26 | Regelstrecke |

| | |
|---|---|
| $\varphi$ | Winkel |
| $\overline{\omega}$ | Winkelgeschwindigkeit |
| a | Winkelbeschleunigung |
| M | Drehmoment |
| J | Trägheitsmoment |
| a | erste Welle |
| b | zweite Welle |
| c | dritte Welle |

**Patentansprüche**

**1.** Rotationsdämpfer für ein Kraftfahrzeug, umfassend ein, Kreiselelement umfassend eine erste Welle (a), die gegenüber einem ersten Bauteil (12) drehbar gelagert ist, und mit einem zweiten Bauteil (14), verbunden ist, welches eine Relativbewegung gegenüber dem ersten Bauteil (12) ausführt, **dadurch gekennzeichnet, dass** die erste Welle (a) einen Rahmen aufweist, in welchem eine zweite Welle (b) orthogonal liegt und drehbar gelagert ist, wobei die zweite Welle (b) einen Rahmen aufweist, in welchem eine dritte Welle (c) orthogonal zur zweiten Welle (b) und im zweiten Rahmen drehbar gelagert ist, wobei die zweite Welle (b) und die dritte Welle (c) je mit einem Wellenantrieb (20, 22) verbunden sind, und ferner die dritte Welle (c) eine Schwungmasse (19) aufweist, wobei eine Drehung der zweiten Welle (b) durch den zweiten Wellenantrieb (20) eine Änderung der Winkelgeschwindigkeit ($\overline{\omega}_a$) oder des Moments ($M_a$) der mit dem zweiten Bauteil (14) verbundenen ersten Welle (a) bewirkt, wobei ein erster Sensor (17) zur Bestimmung der Drehung der ersten Welle (a) vorgesehen ist und ferner eine Reglereinheit (16) wenigstens zur Beeinflussung des zweiten Wellenmotors (20) zur Einstellung der Winkelgeschwindigkeit ($\overline{\omega}_b$) und / oder der Moments $M_b$ der zweiten Welle (b) vorgesehen ist, wobei ein vom ersten Sensor (17) unterschiedlicher Sensor (15) zur Bestimmung der Lageänderung des ersten Bauteils (12) vorgesehen ist, der mit der Reglereinheit (16) verbunden ist.

2. Rotationsdämpferanordnung nach Anspruch 1, **dadurch gekennzeichnet, dass** die Reglereinheit (16) derart mit dem zweiten Wellenmotor (20) verbunden ist, dass dieser die Winkelgeschwindigkeit ($\overline{\omega}_b$) und/oder das Drehmoment ($M_b$) der zweiten Welle (b) erhöhen kann.

3. Rotationsdämpferanordnung nach Anspruch 1 oder 2, **dadurch gekennzeichnet, dass** als Regelgröße die Winkelgeschwindigkeit ($\overline{\omega}_a$) oder das Moment ($M_a$) der ersten Welle (a) verwendet wird, wozu ein Sensor (17) zur Winkelgeschwindigkeitsmessung ($\overline{\omega}_a$) oder das Moment ($M_a$) der ersten Welle (a) mit der Reglereinheit (16) verbunden ist.

4. Rotationsdämpferanordnung einem der vorangehenden Ansprüche, **dadurch gekennzeichnet, dass** Stellgröße das Moment ($M_b$) der zweiten Welle (b) verwendet wird, wozu dem zweiten Wellenmotor (20) Energie zugeführt oder abgeführt wird.

5. Rotationsdämpferanordnung nach einem der vorangehenden Ansprüche, **dadurch gekennzeichnet, dass** Erfassungseinrichtungen vorgesehen sind, die als Eingangsgröße für die Reglereinheit (16) die Winkelpositionen ($\varphi_a$, $\varphi_b$) der ersten Welle (a) und zweiten Welle (b) erfassen.

6. Rotationsdämpfer nach einem der vorangehenden Ansprüche, **dadurch gekennzeichnet, dass** die Schwungmasse (19) durch ihre Drehträgheiten ($J_a$, $J_b$, $J_c$) das Übersetzungsverhältnis der einzelnen Wellenmomente ($M_a$, $M_b$, $M_c$) festlegt.

7. Verfahren zur Regelung einer Dämpferanordnung nach einem der vorangehenden Ansprüche, **dadurch gekennzeichnet, dass** als Regelgröße das Moment ($M_a$) der ersten Welle (a) und/oder die Winkelgeschwindigkeit ($\overline{\omega}_a$) der ersten Welle (a) geregelt werden, wobei eine Stellgröße $M_b$ an der zweiten Welle (b) so beeinflusst wird, dass das Vorzeichen der Beschleunigung $\overline{\dot{\omega}}_c$ der Welle (c), dem Vorzeichen der Winkelgeschwindigkeit ($\overline{\omega}_c$) der Welle (c) entspricht.

8. Verfahren nach Anspruch 7, **dadurch gekennzeichnet, dass** eine Dämpferkennlinie des Moments ($M_a$) der ersten Welle (a) in Abhängigkeit der Winkelgeschwindigkeit ($\overline{\omega}_a$) hinterlegt ist, wobei der Sollwert zur Regelung der Regelgröße ($Ma$) abhängig von der gemessenen Winkelgeschwindigkeit der ersten Welle (a) ist.

9. Verwendung eines kardanisch aufgehängten Kreiselelements umfassend eine erste Welle (a), die gegenüber einem ersten Bauteil (12) drehbar gelagert ist, und mit einem zweiten Bauteil (14), verbunden ist, welches eine Relativbewegung gegenüber dem ersten Bauteil (12) ausführt, wobei die erste Welle (a) einen Rahmen aufweist, in welchem eine zweite Welle (b) orthogonal liegt und drehbar gelagert ist, wobei die zweite Welle (b) einen Rahmen aufweist, in welchem eine dritte Welle (c) orthogonal zur zweiten Welle (b) und im zweiten Rahmen drehbar gelagert ist, wobei die zweite Welle (b) und die dritte Welle (c) je mit einem Wellenantrieb (20, 22) verbunden sind, und ferner die dritte Welle (c) eine Schwungmasse (19) aufweist, wobei eine Drehung der zweiten Welle (b) durch den zweiten Wellenantrieb (20) eine Änderung der Winkelgeschwindigkeit ($\overline{\omega}_a$) oder des Moments ($Ma$) der mit dem zweiten Bauteil (14) verbundenen ersten Welle (a) bewirkt, zur Dämpfung einer Relativbewegung einer ungefederten Masse (14) eines Kraftfahrzeugs gegenüber einer gefederten Masse (12) eines Kraftfahrzeugs.

**Claims**

1. Rotary damper for a motor vehicle, comprising a circular element comprising a first shaft (a) which is mounted rotatably with respect to a first component (12) and is connected to a second component (14) which performs a relative movement with respect to the first component (12), **characterised in that** the first shaft (a) has a frame in which a second shaft (b) is located orthogonally and is mounted rotatably wherein the second shaft (b) has a frame in which a third shaft (c) is mounted orthogonal to the second shaft (b) and rotatable in the second frame wherein the second shaft (b) and the third shaft (c) are each connected to a shaft drive (20, 22) and the third shaft (c) also has an oscillating weight (19) wherein a rotation of the second shaft (b) through the second shaft drive (20) causes a change of the angular speed ($\omega_a$) or of the moment ($M_a$) of the first shaft (a) connected to the second component (14) wherein a first sensor (17) is provided to determine the rotation of the first shaft (a) and a controller unit (16) is also provided at least to influence the second shaft motor (20) to set the angular speed ($\omega_b$) and/or the moment $M_b$ of the second shaft (b) wherein a sensor (15) that is different from the first sensor (17) is provided to determine the change of position of the first component (12) which is connected to the controller unit (16).

2. Rotary damper arrangement according to claim 1,
**characterised in that** the controller unit (16) is connected to the second shaft motor (20) such that said shaft motor can increase the angular speed ($\omega_b$) and/or the torque ($M_b$) of the second shaft (b).

3. Rotary damper arrangement according to claim 1 or 2,
**characterised in that** the angular speed ($\omega_a$) or the moment ($M_a$) of the first shaft (a) is used as the control variable for which purpose a sensor (17) is connected to the controller unit (16) for the angular speed measurement ($\omega_a$) or the moment ($M_a$) of the first shaft (a).

4. Rotary damper arrangement according to any one of the preceding claims, **characterised in that** the moment ($M_b$) of the second shaft (b) is used as the manipulated variable for which purpose energy is supplied to or discharged from the second shaft motor (20).

5. Rotary damper arrangement according to any one of the preceding claims, **characterised in that** recording devices are provided which record the angular positions ($\Phi_a$, $\Phi_b$) of the first shaft (a) and second shaft (b) as the input variable for the controller unit (16).

6. Rotary damper arrangement according to any one of the preceding claims, **characterised in that** the oscillating mass (19) defines the transmission ratio of the individual shaft moments ($M_a$, $M_b$, $M_c$) through its inertias ($J_a$, $J_b$, $J_c$).

7. Method for controlling a damper arrangement according to any one of the preceding claims, **characterised in that** the moment ($M_a$) of the first shaft (a) and/or the angular speed ($\omega_a$) of the first shaft (a) are controlled as the control variable wherein a manipulated variable $M_b$ is influenced at the second shaft (b) such that the sign of the acceleration $\omega_c$ of the shaft (c) corresponds to the sign of the angular speed ($\omega_c$) of the shaft (c).

8. Method according to claim 7, **characterised in that** a damper characteristic curve of the moment ($M_a$) of the first shaft (a) is stored as a function of the angular speed ($\omega_a$) wherein the target value for controlling the control variable ($M_a$) is dependent on the measured angular speed of the first shaft (a).

9. Use of a cardanically suspended circular element comprising a first shaft (a) which is mounted rotatably with respect to a first component (12) and is connected to a second component (14) which performs a relative movement with respect to the first component (12) wherein the first shaft (a) has a frame in which a second shaft (b) is located orthogonally and is mounted rotatably wherein the second shaft (b) has a frame in which a third shaft (c) is mounted orthogonal to the second shaft (b) and rotatable in the second frame wherein the second shaft (b) and the third shaft (c) are each connected to a shaft drive (20, 22) and the third shaft (c) also has an oscillating weight (19) wherein a rotation of the second shaft (b) through the second shaft drive (20) causes a change of the angular speed ($\omega_a$) or of the moment ($M_a$) of the first shaft (a) connected to the second component (14) in order to dampen a relative movement of an unsprung mass (14) of a motor vehicle with respect to a sprung mass (12) of a motor vehicle.

## Revendications

1. Amortisseur rotatif pour un véhicule automobile, comprenant un élément gyroscopique comprenant un premier arbre (a), qui est logé de manière à pouvoir tourner par rapport à une première pièce (12) et qui est relié à une deuxième pièce (14) qui exécute un mouvement relatif par rapport à la première pièce (12),
**caractérisé en ce que** le premier arbre (a) comporte un cadre dans lequel un deuxième arbre (b) est orthogonal et est logé de manière à pouvoir tourner,
dans lequel le deuxième arbre (b) comporte un cadre dans lequel un troisième arbre (c) est logé orthogonal au deuxième arbre (b) et de manière à pouvoir tourner dans le deuxième cadre,
dans lequel le deuxième arbre (b) et le troisième arbre (c) sont reliés chacun à un entraînement d'arbre (20, 22) et, de plus, le troisième arbre (c) comporte une masse d'équilibrage (19),

dans lequel une rotation du deuxième arbre (b) par le deuxième entraînement d'arbre (20) provoque une variation de la vitesse angulaire ($\omega_a$) ou du moment ($M_a$) du premier arbre (a) relié à la deuxième pièce (14),

dans lequel un premier capteur (17) est prévu pour déterminer la rotation du premier arbre (a) et, de plus, une unité régulatrice (16) est prévue au moins pour influencer le deuxième moteur d'arbre (20) afin de régler la vitesse angulaire ($\omega_b$) et/ou le moment ($M_b$) du deuxième arbre (b),

dans lequel un capteur (15) différent du premier capteur (17) est prévu pour déterminer la variation de position de la première pièce (12) et est relié à l'unité régulatrice (16).

2. Amortisseur rotatif selon la revendication 1, **caractérisé en ce que** l'unité régulatrice (16) est reliée de telle sorte au deuxième arbre de moteur (20) que celui-ci peut augmenter la vitesse angulaire ($\omega_b$) et/ou le moment ($M_b$) du deuxième arbre (b).

3. Amortisseur rotatif selon la revendication 1 ou 2, **caractérisé en ce que**, comme grandeur réglée, on utilise la vitesse angulaire ($\omega_a$) ou le moment ($M_a$) du premier arbre (a), un capteur (17) destiné à la mesure de la vitesse angulaire ($\omega_a$) ou du moment ($M_a$) du premier arbre (a) étant relié à cet effet à l'unité régulatrice (16).

4. Amortisseur rotatif selon l'une des revendications précédentes, **caractérisé en ce que**, comme grandeur réglante, on utilise le moment ($M_b$) du deuxième arbre (b), de l'énergie étant amenée ou retirée à cet effet au deuxième moteur d'arbre (20).

5. Amortisseur rotatif selon l'une des revendications précédentes, **caractérisé en ce qu'**il est prévu des dispositifs de détection qui détectent comme grandeur d'entrée pour l'unité régulatrice (16) les positions angulaires ($\Phi_a$, $\Phi_b$) du premier arbre (a) et du deuxième arbre (b).

6. Amortisseur rotatif selon l'une des revendications précédentes, **caractérisé en ce que** la masse d'équilibrage (19) fixe par ses inerties en rotation ($J_a$, $J_b$, $J_c$) le rapport de multiplication des moments d'arbre individuels ($M_a$, $M_b$, $M_c$).

7. Procédé de réglage d'un amortisseur selon l'une des revendications précédentes, **caractérisé en ce qu'**on règle comme grandeur réglée le moment ($M_a$) du premier arbre (a) et/ou la vitesse angulaire ($\omega_a$) du premier arbre (a), une grandeur réglante ($M_b$) au niveau du deuxième arbre (b) étant influencée de telle sorte que le signe de l'accélération ($\dot{\omega}_c$) de l'arbre (c) correspond au signe de la vitesse angulaire ($\omega_c$) de l'arbre (c).

8. Procédé selon la revendication 7, **caractérisé en ce qu'**une courbe caractéristique d'amortisseur du moment ($M_a$) du premier arbre (a) en fonction de la vitesse angulaire ($\omega_a$) est enregistrée, la valeur de consigne destinée au réglage de la grandeur réglée ($M_a$) étant dépendante de la vitesse angulaire mesurée du premier arbre (a).

9. Utilisation d'un élément gyroscopique suspendu à la cardan et comprenant un premier arbre (a), qui est logé de manière à pouvoir tourner par rapport à une première pièce (12) et qui est relié à une deuxième pièce (14) qui exécute un mouvement relatif par rapport à la première pièce (12),

dans lequel le premier arbre (a) comporte un cadre dans lequel un deuxième arbre (b) est orthogonal et est logé de manière à pouvoir tourner,

dans lequel le deuxième arbre (b) comporte un cadre dans lequel un troisième arbre (c) est logé orthogonal au deuxième arbre (b) et de manière à pouvoir tourner dans le deuxième cadre,

dans lequel le deuxième arbre (b) et le troisième arbre (c) sont reliés chacun à un entraînement d'arbre (20, 22) et, de plus, le troisième arbre (c) comporte une masse d'équilibrage (19),

dans lequel une rotation du deuxième arbre (b) par le deuxième entraînement d'arbre (20) provoque une variation de la vitesse angulaire ($\omega_a$) ou du moment ($M_a$) du premier arbre (a) relié à la deuxième pièce (14),

afin d'amortir un mouvement relatif d'une masse non suspendue (14) d'un véhicule automobile par rapport à une masse suspendue (12) d'un véhicule automobile.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011101350 A1
- DE 102011101701
- DE 60200864 T2
- US 20040244513 A1
- WO 2011100796 A1
- EP 0650890 B1
- EP 1935679 A